# EUROPEAN PATENT APPLICATION

(11) **EP 4 525 386 A1**
(43) Date of publication of application: **19.03.2025**
(21) Application number: 24200589.0
(22) Date of filing: 16.09.2024
(51) Int. Cl.: H04L 41/0213, H04L 41/0853, H04L 41/34

(54) **METHOD AND APPARATUS TO ENCODE RAN OAM-RELATED DATA OVER THE R1 AND OTHER O-RAN OPEN INTERFACES USING GENERIC DATA ENCODING MODEL AND INFORMATION SEMANTICS**

(30) Priority: 15.09.2023 US 202363583006 P; 13.09.2024 US 202418884343
(71) Applicant: Mavenir Systems, Inc., Richardson, TX 75081 (US)
(72) Inventor: SIVARAJ, Rajarajan, Plano, 75074 Texas (US)
(74) Representative: dompatent von Kreisler Selting Werner - Partnerschaft von Patent- und Rechtsanwälten mbB

(57) **Abstract**

A method for providing generic information encoding for RAN OAM-related data by providing semantics of RAN OAM data including CM/PM/Trace data and a generic information encoding model using Information Elements (IE) and/or IE structures that leverage the RAN semantics for encoding RAN OAM-related data using common message structures to encode any number of OAM-related RAN parameters, nested in hierarchical RAN structures to any depths enabling an R1 data consumer via a data customer computer to discover data capabilities of an R1 data producer that produces the RAN OAM-related data over an O-RAN-standardized R1 interface between rApps and Non-RT RIC/SMO platform functions.

## Description

### BACKGROUND

### 1. Field of the Invention

The present disclosure is related to data type capabilities and relevant information to be used for R1 procedures dealing with data related to Radio Access Network Operations, Administration, and Maintenance (RAN OAM) -related functions. More particularly, the present disclosure is related to the R1 interface between the rApps and the Non-Real Time RAN Intelligent Controller (Non-RT RIC) network function in an Open RAN (O-RAN) architecture including certain data modeling and data type definition aspects pertaining to data produced by RAN OAM-related functions.

### 2. Description of Related Art

The RAN OAM-related functions are the producers of RAN OAM-related services over the R1 interface for consumption by the rApps, which are consumers of RAN OAM-related services over the R1 interface. rApps are designed to run on the Non-RT RIC to automate and optimize RAN management and operations. In their role as R1 service producers, the RAN OAM-related functions produce the following services over R1:
a. Configuration Management Service - The following capabilities are offered by this service to the rApps over R1, as defined in R1 General Architecture and Principles. i. Retrieving configuration schemas; ii. Reading configuration data; and iii. Writing configuration changes.
b. Performance Management Service - The following capabilities are offered by this service to the rApps over R1, as defined in R1 General Architecture and Principles, i. Querying performance information.
c. Fault Management Service - The following capabilities are offered by this service to the rApps over R1, as defined in R1 General Architecture and Principles, i. Querying alarm information; and ii. Changing the alarm acknowledgement state.
d. Trace Management Service.

In their role as R1 service producers, the RAN OAM-related functions register the services that they produce with the Service Management and Exposure (SME) Function, for discovery by the rApps via the R1 interface.

In their role as R1 data producers, the RAN OAM-related functions register the data types that they produce with the DME, for consumption by the rApps via the R1 interface using the services produced by the DME over R1.

However, over R1, the discovery of the data capabilities pertaining to RAN OAM-related data and the relevant IEs/IE structures are not yet standardized nor are they specified in the prior art. The R1 type definitions (R1 TD) do not yet have the data structures relevant to the OAM-related data, for subsequent usage in R1 application protocol (R1AP) in exchanging messages

**Table 1**

| | | |
|---|---|---|
| mnsLabel | Human-readable name of management service. | type: String |
| | | multiplicity: 1 |
| | | isOrdered: N/A |
| | | isUnique: N/A |
| | | defaultValue: None |
| | | isNullable: False |
| | | |

| **Attribute Name** | **Documentation and Allowed Values** | **Properties** |
|---|---|---|
| mnsType | Type of management service. | type: ENUM |
| | | multiplicity: 1 |
| | allowedValues: ProvMnS, FaultSupervisionMnS, | isOrdered: N/A |
| | StreamingDataReportingMnS, FileDataReportingMnS | isUnique: N/A |
| | | defaultValue: None |
| | | isNullable: False |
| mnsVersion | Version of management service. | type: String |
| | | multiplicity: 1 |
| | | isOrdered: N/A |
| | | isUnique: N/A |
| | | defaultValue: None |
| | | isNullable: False |
| mnsAddress | Addressing information for Management Service operations. | type: String |
| | | multiplicity: 1 |
| | | isOrdered: N/A |
| | | isUnique: N/A |
| | | defaultValue: None |
| | | isNullable: False |

between an R1 services/data producer and an R1 services/data consumer in the Non-RT RIC and SMO Network functions.

Referring to Table 1, a relevant comparable prior art for discovery of capabilities, in the context of "service capabilities" is discussed in 3GPP management systems using "Network Resource Model" based Information Object Class (IOC) in the context of a management interface. The IOC "MnSRegistry" is used for representing the services produced by the producer. The MnSRegistry IOC is shown in Table 1.

Using the provisioning services operations discussed in 3GPP TS 28.532, the information about the RAN OAM services produced by the producer can be read by the consumer. However, this structure does not encode specific data or data capabilities, and Information Elements produced by the RAN OAM services producer.

U.S. Patent Application Publ. No. 2023/0055590 A1 entitled "Method and apparatus for generic encoding of configurable ran parameters over e2ap messages" discloses encoding used for O-RAN E2SM-RC specifications. This reference discusses a generic encoding model and common message structure to encode RAN parameters in a level of nested hierarchy while exchanging E2AP messages between the Near-RT RIC and the O-RAN E2 nodes. However, this reference does not specifically deal with the semantics of the RAN OAM-related data, which have certain significant differences from the RAN parameters used in 3GPP RAN3 / RAN2 and O-RAN E2AP/E2SM specifications.

Accordingly, there is a need for a system and method that overcomes, alleviates, and/or mitigates one or more of the aforementioned and other deleterious effects of prior art.

### SUMMARY

The proposed system and method address this gap in the prior state-of-art by:

Providing the semantics of RAN OAM data, such as Configuration Management/Performance Measurement/Trace data, to be used while exchanging information over standardized interfaces for inter-operability.

Providing the generic information encoding model for encoding RAN OAM-related data using Information Elements (IE) and/or IE structures that leverage the invented RAN semantics.

Thus, the proposed system and method is useful to enable a data consumer to discover the data capabilities of the data producer that produces RAN OAM-related data (CM/PM/Trace) over inter-operable interfaces. This system and method shall be applied to the O-RAN-standardized R1 interface between the rApps and the Non-RT RIC/SMO platform functions. The system and method shall also be applicable for standardizations in other relevant interfaces for inter-operability between a producer of RAN OAM-related data and a consumer of RAN OAM-related data.

In one configuration, IEs/IE structures related to the "discovery" of RAN OAM data capabilities, that are produced by the Non-RT RIC platform functions, by the consumers of such data, such as the 3rd party apps is considered.

The system and method further use R1AP message structures and R1TD type definitions that are based on the principles of "generic encoding", which proposes the usage of common message structures to encode any number of OAM-related RAN parameters, nested in hierarchical RAN structures to any depths (as per 3GPP SA5 specifications), for exchanging API messages between the R1 data producers and R1 data consumers.

The system and method also focus on the information and the data models. Given that REST/JSON is standardized as one of the transport protocols for the R1 interface, it is assumed that the solution set that implements the proposed encoding model and IE structure in this contribution is based on JSON. Alternative solution sets can be gRPC/GPB.

The RAN OAM-related functions are data producers, offering the following capabilities: a. A set of Configuration Management data capabilities; b. A set of Performance Management data capabilities; c. A set of Trace Management data capabilities; and d. A set of Fault Management data capabilities.

For this application the following terms and definitions shall apply:

The term "data" as used herein means any indicia, signals, marks, symbols, domains, symbol sets, representations, and any other physical form or forms representing information, whether permanent or temporary, whether visible, audible, acoustic, electric, magnetic, electromagnetic or otherwise manifested. The term "data" as used to represent predetermined information in one physical form shall be deemed to encompass any and all representations of the same predetermined information in a different physical form or forms.

The term "network" as used herein includes both networks and internetworks of all kinds, including the Internet, and is not limited to any particular type of network or inter-network.

The terms "first" and "second" are used to distinguish one element, set, data, object or thing from another, and are not used to designate relative position or arrangement in time.

The terms "coupled", "coupled to", "coupled with", "connected", "connected to", and "connected with" as used herein each mean a relationship between or among two or more devices, apparatus, files, programs, applications, media, components, networks, systems, subsystems, and/or means, constituting any one or more of (a) a connection, whether direct or through one or more other devices, apparatus, files, programs, applications, media, components, networks, systems, subsystems, or means, (b) a communications relationship, whether direct or through one or more other devices, apparatus, files, programs, applications, media, components, networks, systems, subsystems, or means, and/or (c) a functional relationship in which the operation of any one or more devices, apparatus, files, programs, applications, media, components, networks, systems, subsystems, or means depends, in whole or in part, on the operation of any one or more others thereof.

As used herein, the phrases "at least one," "one or more," "or," and "and/or" are openended expressions that are both conjunctive and disjunctive in operation. For example, each of the expressions "at least one of A, B and C," "at least one of A, B, or C," "one or more of A, B, and C," "one or more of A, B, or C," "A, B, and/or C," and "A, B, or C" means A alone, B alone, C alone, A and B together, A and C together, B and C together, or A, B and C together.

In one configuration, a method of information encoding for Radio Access Network Operations, Administration, and Maintenance (RAN OAM) related data via a computer is provided comprising the steps of: providing semantics of RAN OAM data (RAN semantics) comprising RAN OAM-related data to be used while exchanging information over standardized interfaces for inter-operability, and providing a generic information encoding model for encoding the RAN OAM-related data, the generic information encoding model using common message structures to encode OAM-related RAN parameters nested in RAN structures for exchanging Application Programming Interface (API) messages between R1 data producers and R1 data consumers. The method further comprises the steps of: the generic information encoding model using Information Elements (IE) and/or IE structures that leverage the RAN semantics, and enabling an R1 data consumer via a data customer computer to discover data capabilities of an R1 data producer that produces the RAN OAM-related data over an Open-RAN (O-RAN) standardized R1 interface between rApps and Non-RT RIC/ service management and orchestration (SMO) platform functions.

The above-described and other features and advantages of the present disclosure will be appreciated and understood by those skilled in the art from the following detailed description and appended claims.

### BRIEF DESCRIPTION OF THE DRAWINGS

A block diagram illustrating one configuration of O-RAN architecture.

### DETAILED DESCRIPTION

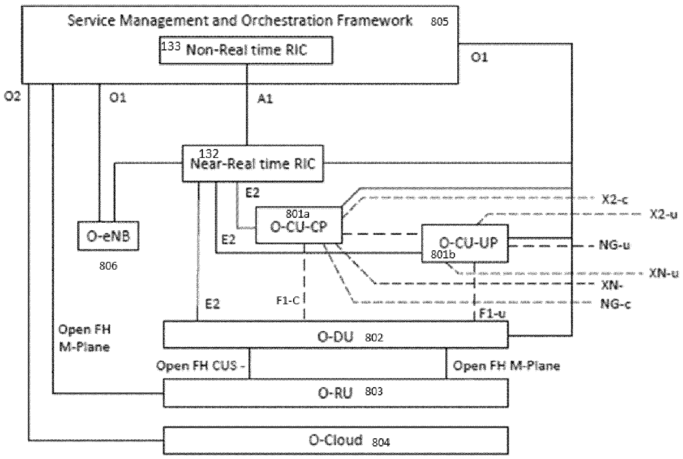

Referring now to FIG. 1, an Open Radio Access Network (O-RAN) is based on disaggregated components which are connected through open and standardized interfaces based on 3GPP NG-RAN. An overview of O-RAN with disaggregated RAN CU (Centralized Unit), DU (Distributed Unit), and RU (Radio Unit), near-real-time Radio Intelligent Controller (RIC) and non-real-time RIC is illustrated in FIG. 1.

The CU (shown split as O-CU-CP 801a and O-CU-UP 801b) and the DU (shown as O-DU 802) are connected using the F1 interface (with F1-C for control plane and F1-U for user plane traffic) over a mid-haul (MH) path. One DU can host multiple cells (e.g., one DU could host 24 cells) and each cell may support many users. For example, one cell may support 800 Radio Resource Control (RRC)-connected users and out of these 800, there may be 250 Active users (i.e., users that have data to send at a given point of time).

A cell site can comprise multiple sectors, and each sector can support multiple cells. For example, one site could comprise three sectors and each sector could support eight cells (with each cell being on a different frequency band in each sector). One CU-CP (CU-Control Plane) could support multiple DUs and thus multiple cells. For example, a CU-CP could support 500 cells and around 100,000 User Equipment (UE). Each UE could support multiple Data Radio Bearers (DRBs) and there could be multiple instances of CU-UP (CU-User Plane) to serve these DRBs. For example, each UE could support 4 DRBs, and 400,000 DRBs (corresponding to 100,000 UEs) can be served by five CU-UP instances (and one CU-CP instance).

The DU can be in a private data center, or it could be located at a cell-site. The CU could also be in a private data center or even hosted on a public cloud system. The DU and CU, which are typically located at different physical locations, could be tens of kilometers apart. The CU communicates with a 5G core system, which could also be hosted in the same public cloud system (or could be hosted by a different cloud provider). A RU (Radio Unit) (shown as O-RU 803 in FIG. 1) is located at a cell-site and communicates with the DU via a front-haul (FH) interface.

The E2 nodes (CU and DU) are connected to the near-real-time RIC 132 using the E2 interface. The E2 interface is used to send data (e.g., user and/or cell KPMs) from the RAN, and deploy control actions and policies to the RAN at near-real-time RIC 132. The applications or services at the near-real-time RIC 132 that deploys the control actions and policies to the RAN are called xApps. During the E2 setup procedures, the E2 node advertises the metrics it can expose, and an xApp in the near-RT RIC can send a subscription message specifying key performance metrics which are of interest. The near-real-time RIC 132 is connected to the non-real-time RIC 133 (which is shown as part of Service Management and Orchestration (SMO) Framework 805 in FIG. 1) using the A1 interface. The applications that are hosted at non-RT-RIC are called rApps. Also shown in FIG. 1 are O-eNB 806 (which is shown as being connected to the near-real-time RIC 132 and the SMO Framework 805) and O-Cloud 804 (which is shown as being connected to the SMO Framework 805).

It should be noted that, while various functions and methods will be described and presented in a sequence of steps, the sequence has been provided merely as an illustration of one advantageous embodiment, and that it is not necessary to perform these functions in the specific order illustrated. It is further contemplated that any of these steps may be moved and/or combined relative to any of the other steps. In addition, it is still further contemplated that it may be advantageous, depending upon the application, to utilize all or any portion of the functions described herein.

**Configuration Management data capabilities.** These capabilities are associated with Configuration Management (CM) of one or more managed entities. The CM data capabilities correspond to:
a. The IOC class definitions representing the NR Network Resource Model (NRM) for 5G O-RAN NFs defined in Section 4 of 3GPP TS 28.541. The names of the data types take after the names of the IOCs.
b. The IOC class definitions representing the Network Slice NRM for 5G O-RAN NFs defined in Section 6 of 3GPP TS 28.541. The names of the data types take after the names of the IOCs.
c. The IOC class definitions representing the E-UTRA NRM for 4G O-RAN NFs defined in Section 4 of 3GPP TS 28.658. The names of the data types take after the names of the IOCs.
d. The YANG modules for the O-RU defined in O-RAN WG4 Management Plane specification.
e. The IOC/YANG modules defined for the O-RAN NFs in O-RAN WG5.

Each CM data capability corresponds to a CM data type. Each CM data type has a set of IEs, each of which has:
a. An IE name - the name of the IE associated with a managed entity, which is subject to configuration management.
b. An IE value type - The value type of the IE associated with a managed entity, which is subject to configuration management. An IE can belong to one of the following attribute value types: (i) ELEMENT - When the attribute is a singleton RAN configuration parameter, not having any other associated RAN configuration parameter. (ii) STRUCTURE - When the attribute is a sequence of attributes, each of which can, in turn, either be an ELEMENT or a STRUCTURE or a LIST, (iii) CHOICE - When the attribute is one among the sequence of attributes, each of which can, in turn, either be an ELEMENT or a STRUCTURE or a LIST, (iv) LIST - When the attribute is a LIST of STRUCTURES, where each STRUCTURE is as defined above. The sequence of RAN parameters is the same across all individual ITEMIZED STRUCTURES within the list.
c. An IE definition, data type and unit - The definition, data type and value range of the IE associated with a managed entity, which is subject to configuration management. The definition, data type and value range of the IE shall be traced to the corresponding 3GPP/O-RAN definitions (as defined in 3GPP TS 28.541, 3GPP TS 28.658, O-RAN WG10 O1 interface, O-RAN WG4 M-plane, O-RAN WG5 M-plane).
d. An IE key flag notion - It indicates whether the given IE is a "key" parameter. A "key" IE serves as an index or reference to other attributes/IEs of the data type, especially when contained in a list. The values of the attributes/IEs designated as "key" shall themselves not be changed but shall point to other attributes/IEs whose values can be changed, or whose listing can be modified.

Each CM data type may have one or more name-contained associated data types. The CM data type can either have a 1-to-any (0 or more) mapping or a 1-to-1 mapping with each name-contained associated data type.

Each CM data type may have one or more non-name-contained associated data types. The CM data type can either have a 1-to-any (0 or more) mapping or a 1-to-1 mapping with each non-name-contained associated data type.

Each CM data type shall support one or more of the following data generation/reporting triggers: a) Event-driven: i. When an instance of the CM data type is created in an O-RAN NF; ii. When an instance of the CM data type is modified in an O-RAN NF; and iii. When an instance of the CM data type is deleted in an O-RAN NF. b) Periodic: i. For reporting the list of events related to the CM data type at a designated interval.

As examples, we look at 3 CM data capabilities: a) CM Data Capability "GNBCUCPFunction" (to-be-defined in R1TD) i. This data capability deals with the management representation of O-CU-CP, as discussed in 3GPP TS 28.541; ii. The data type (used over R1) of this capability is CMService.NRNRM.OCUCPFunction; iii. The data type is given by Table 2; and iv. The name-contained associated data types include CMService.NRNRM.NRCellCU.

**Table 2**

| **IEs** | | **IE Type** | **IE definition** | **Key Flag** | **Semantics description** |
|---|---|---|---|---|---|
| gNBCUCPID | | ELEMENT | *gNBID* attribute in TS 28.541 | TRUE | |
| gNBIDLength | | ELEMENT | *gNBIDLength* attribute in TS 28.541 | | |
| gNBCUName | | ELEMENT | *gNBCUName* attribute in TS 28.541 | | |
| pLMNId | | ELEMENT | *pLMNId* attribute in TS 28.541 | | |
| x2BlackList | | LIST | *x2BlackList* attribute in TS 28.541 | | |
| 1>x2BlackListItem | | STRUCTURE | | | |
| | 2>eNBId | ELEMENT | *eNBId* attribute in TS 28.658 | TRUE | |
| x2WhiteList | | LIST | *x2WhiteList* attribute in TS 28.541 | | |
| 1 >x2WhiteListItem | | STRUCTURE | | | |
| | 2>eNBId | ELEMENT | *eNBId* attribute in TS 28.658 | TRUE | |
| xnBlackList | | LIST | *xnBlackList* attribute in TS 28.541 | | |
| 1>xnBlackListItem | | STRUCTURE | | | |
| | 2>gNBCUCPId | ELEMENT | *eNBId* attribute in TS 28.658 | TRUE | |
| xnWhiteList | | LIST | *xnWhiteList* attribute in TS 28.541 | | |
| 1 >xnWhiteListItem | | STRUCTURE | | | |
| | 2>gNBCUCPId | ELEMENT | *gNBCUCPID* attribute in TS 28.541 | TRUE | |

CM Data Capability "NRCellCU". This data capability deals with the part of NR cell information that is responsible for the management of inter-cell mobility and neighbour relations via ANR. The data type (used over R1) of this capability is CMService.NRNRM.NRCellCU. The data type is given by Table 3. The name-contained associated data types includes CMService.NRNRM.CESManagementFunction.

**Table 3**

| **IEs** | | | **IE Type** | **IE definition** | **Key Flag** | **Semantics description** |
|---|---|---|---|---|---|---|
| cellLocalID | | | ELEMENT | *cellLocalID* IE in TS 28.541 | TRUE | |
| pLMNInfoList | | | LIST | *PLMNInfoList* IE in TS 28.541 | | |
| 1>pLMNInfoltem | | | STRUCTURE | *PLMNInfo <<dataType>>* in TS 28.541 | | |
| | 2>pLMNId | | ELEMENT | *pLMNId* IE in TS 28.541 | TRUE | |
| | 2>sNSSAI | | STRUCTURE | *S-NSSAI <<datatype>>* in TS 28.541 | | |
| | | 3>sST | ELEMENT | *sST* IE in TS 28.541 | TRUE | |
| | | 3>sD | ELEMENT | *sD* IE in TS 28.541 | | |

CM Data Capability "CESManagementFunction". This data capability represents the management capabilities of Cross Domain-Centralized SON Energy Saving (ES) functions. This is provided for Energy Saving purposes. The data type (used over R1) of this capability is CMService.NRNRM.CESManagementFunction. The data type is given by Table 4.

**Table 4**

| **IEs** | **IE Type** | **IE definition** | **Key Flag** | **Semantics description** |
|---|---|---|---|---|
| cesSwitch | ELEMENT | *cesSwitch* IE in TS 28.541 | | |
| energySavingControl | ELEMENT | *energySavingControl* IE in TS 28.541 | | |
| energySavingState | ELEMENT | *energySavingState* IE *in TS 28.541* | | |

**Performance Management data capabilities.** These capabilities are associated with performance management of one or more managed entities. The PM data capabilities correspond to:
a) The PMs and KPIs pertaining to MOCs defined for NR NRM (from TS 28.541) for 5G O-RAN NFs, available in Section 5 of 3GPP TS 28.552, and in TS 28.554.
b) The PMs and KPIs pertaining to MOCs defined for E-UTRA NRM (from TS 28.658) for 4G O-RAN NFs, available in Section 4 of 3GPP TS 32.425, and in TS 32.450.
c) The PMs and KPIs pertaining to MOCs defined for NR NRM (from TS 28.541) for 5G O-RAN NSSIs, available in Section 5 of 3GPP TS 28.552, and in TS 28.554.
d) The counters and PMs pertaining to MOs defined for O-RU, available in Section 10 and Annex B of O-RAN WG4 Management Plane specification.

Each PM data capability corresponds to a PM data type.

Each PM data type comprises a set of IEs (denoting PMs or KPIs), each of which has the following information:
a) An IE name - The name of the PM/KPI subject to streaming or reporting.
b) The value type of the IE: i) ELEMENT - If the IE corresponds to only a single measurement value, ii) STRUCTURE - If the IE corresponds to a structure of sub-counter measurement IEs, each of which belongs to a value type that is either ELEMENT or STRUCTURE or LIST, iii) CHOICE - If the IE is one among the sequence of sub-counter measurement IEs, each of which can, in turn, either be an ELEMENT or a STRUCTURE or a LIST, iv) LIST - If the measurement corresponds to a LIST of STRUCTURES, where each STRUCTURE is as defined above. The sequence of measurements is the same across all individual ITEMIZED STRUCTURES within the list.
c) A definition, data type and unit of the IE: The definition, data type and value range of the measurement associated with a managed entity, which is subject to performance management. The definition, data type and value range of the measurement shall be traced to the corresponding 3GPP/O-RAN definitions (as defined in 3GPP TS 28.552, 3GPP TS 28.554, 3GPP TS 32.425, 3GPP TS 32.450, O-RAN WG10 O1 interface, O-RAN WG4 M-plane, O-RAN WG5 M-plane).
d) A measurement class for the IE, corresponding to a given CM capability type.
e) The Collection method for the IE: i) Cumulative Counter (Periodic trigger), ii) Gauge Counter (Periodic trigger), iii) Discrete Event Registration (Event trigger), and iv) Status Inspection (Periodic trigger).

Each PM data type shall support one or more of the following data generation/reporting triggers: a) Event-driven: As identified in the corresponding 3GPP specifications, and b) Periodic: For reporting the list of measurement IEs, supporting periodic triggers, related to the PM data type at a designated interval.

As examples, we look at 2 PM data capabilities in Tables 5 and 6.

Table 5 shows measurement data capability "RRU". The data type (used over R1) of this capability is PMService.NRPM.RRU.

**Table 5**

| **IE Name** | | **IE Value Type** | **IE Definition** | **IE Measurement Class** | **IE Collection Method** |
|---|---|---|---|---|---|
| PrbTotDI | | ELEMENT | *RRU.PrbTotDI* measurement in 3GPP TS 28.552 | CMService.NRNRM.NR CellDU | SI |
| PrbTotUI | | ELEMENT | *RRU.PrbTotUI* measurement in 3GPP TS 28.552 | CMService.NRNRM.NR CellDU | SI |
| PrbTotDIDist | | STRUCTURE | *RRU.PrbTotDIDist* in 3GPP TS 28.552 | CMService.NRNRM.NR CellDU | CC |
| >List of Bins | | LIST | *RRU.PrbTotDIDist.BinX* in 3GPP TS 28.552 | | |
| | >>Bin Item | STRUCTURE | A.1.1 | | |
| PrbTotUIDist | | STRUCTURE | *RRU.PrbTotUIDist* in 3GPP TS 28.552 | CMService.NRNRM.NR CellDU | CC |
| >List of Bins | | LIST | *RRU.PrbTotUIDist.BinX* in 3GPP TS 28.552 | | |
| | >>Item | STRUCTURE | A.1.1 | | |
| PrbUsedDI | | STRUCTURE | *RRU.PrbUsedDI* measurement in 3GPP TS 28.552 | CMService.NRNRM.NR CellDU | SI |
| >PrbUsedDIValueNo Subcounter | | ELEMENT | *RRU.PrbUsedDI* measurement without filter in 3GPP TS 28.552 | | |
| >List of QoS Indices | | LIST | *RRU.PrbUsedDI.QoS* measurement in 3GPP TS 28.552 | | |
| | >>QoS Index Item | STRUCTURE | A.1.2 | | |
| >List of SNSSAIs | | LIST | *RRU.PrbUsedDI.SNSSAI* measurement in 3GPP TS 28.552 | | |
| | >>S-NSSAI Item | STRUCTURE | A.1.3 | | |
| >List of PLMN IDs | | LIST | *RRU.PrbUsedDI.PLMN* measurement in 3GPP TS 28.552 | | |
| | >>PLMN ID Item | STRUCTURE | A.1.4 | | |
| PrbUsedUI | | STRUCTURE | *RRU.PrbUsedDI* measurement in 3GPP TS 28.552 | CMService.NRNRM.NR CellDU | SI |
| >PrbUsedUIValueNo Subcounter | | ELEMENT | *RRU.PrbUsedUI* measurement without filter in 3GPP TS 28.552 | | |
| >List of QoS Indices | | LIST | *RRU.PrbUsedUI.QoS* measurement in 3GPP TS 28.552 | | |
| | >>QoS Index Item | STRUCTURE | A.1.2 | | |
| >List of SNSSAIs | | LIST | *RRU.PrbUsedUI.SNSSAI* measurement in 3GPP TS 28.552 | | |
| | >>S-NSSAI Item | STRUCTURE | A.1.3 | | |
| >List of PLMN IDs | | LIST | *RRU.PrbUsedUI.PLMN* measurement in 3GPP TS 28.552 | | |
| | >>PLMN ID Item | STRUCTURE | A.1.4 | | |
| PrbAvailDI | | ELEMENT | *RRU.PrbAvaiIDI* measurement in 3GPP TS 28.552 | CMService.NRNRM.NR CellDU | SI |
| PrbAvailUI | | ELEMENT | *RRU.PrbAvailUI* measurement in 3GPP TS 28.552 | CMService.NRNRM.NR CellDU | SI |
| MaxPrbUsedDI | | STRUCTURE | *RRU.MaxPrbUsedDI* measurement in 3GPP TS 28.552 | CMService.NRNRM.NR CellDU | SI |
| >MaxPrbUsedDINoS ubcounter | | ELEMENT | *RRU.MaxPrbUsedDI* measurement without filter in 3GPP TS 28.552 | | |
| >List of QoS Indices | | LIST | *RRU.MaxPrbUsedDI.QoS* measurement in 3GPP TS 28.552 | | |
| | >>QoS Index Item | STRUCTURE | A.1.2 | | |
| >List of SNSSAIs | | LIST | *RRU.MaxPrbUsedDI.SNS SAI* measurement in 3GPP TS 28.552 | | |
| | >>S-NSSAI Item | STRUCTURE | A.1.3 | | |
| >List of PLMN IDs | | LIST | *RRU.MaxPrbUsedDI.PLM N* measurement in 3GPP TS 28.552 | | |
| | >>PLMN ID Item | STRUCTURE | A.1.4 | | |
| MaxPrbUsedUI | | STRUCTURE | *RRU.MaxPrbUsedUI* measurement in 3GPP TS 28.552 | CMService.NRNRM.NR CellDU | SI |
| >MaxPrbUsedUINoS ubcounter | | ELEMENT | *RRU.MaxPrbUsedUI* measurement without filter in 3GPP TS 28.552 | | |
| >List of QoS Indices | | LIST | *RRU.MaxPrbUsedUI.QoS* measurement in 3GPP TS 28.552 | | |
| | >>QoS Index Item | STRUCTURE | A.1.2 | | |
| >List of SNSSAIs | | LIST | *RRU.MaxPrbUsedUI.SNS SAI* measurement in 3GPP TS 28.552 | | |
| | >>S-NSSAI Item | STRUCTURE | A.1.3 | | |
| >List of PLMN Ids | | LIST | *RRU.MaxPrbUsedUI.PLM N* measurement in 3GPP TS 28.552 | | |
| | >>PLMN ID Item | STRUCTURE | A.1.4 | | |
| PrbTotDIMIMO | | ELEMENT | *RRU.PrbTotDIMimo* IE in TS 28.552 | CMService.NRNRM.NR CellDU | SI |
| PrbTotUIMIMO | | ELEMENT | *RRU.PrbTotUIMimo* IE in TS 28.552 | CMService.NRNRM.NR CellDU | SI |

Table 6 shows the data type (used over R1) of this capability is PMService.NRPM.PacketDelay.

**Table 6**

| **IE Name** | | **IE Value Type** | **IE Definition** | **IE Class** | **IE Collection Method** |
|---|---|---|---|---|---|
| DRB_PdcpSduDelayDI | | STRUCTURE | *DRB.PdcpSduDelayDI* measurement in TS 28.552 | CMService.NRNRM. GNBCUUPFunction | Discrete Event Registration |
| >List of QoS Indices | | LIST | *DRB.PdcpSduDelayDI_Fil* ter measurement in TS 28.552, where "filter" is QoS level | | |
| | >>QoS Index Item | STRUCTURE | A.1.2 | | |
| >List of SNSSAIs | | | *DRB.PdcpSduDelayDI_Fil ter* measurement in TS 28.552, where "filter" is S-NSSAI | | |
| | >>S-NSSAI Item | STRUCTURE | A.1.3 | | |
| >List of PLMN IDs | | | *DRB.PdcpSduDelayDI_Fil ter* measurement in TS 28.552, where "filter" is PLMN ID | | |
| | >>PLMN ID Item | STRUCTURE | A.1.4 | | |
| DRB_PdcpF1DelayDI | | STRUCTURE | *DRB.PdcpF1DelayDI* measurement in TS 28.552 | CMService.NRNRM. GNBCUUPFunction | Discrete Event Registration |
| >List of QoS Indices | | LIST | *DRB.PdcpF1DelayDI_Filte r* measurement in TS 28.552, where "filter" is QoS level | | |
| | >>QoS Index Item | STRUCTURE | A.1.2 | | |
| >List of SNSSAIs | | | *DRB.PdcpF1DelayDI_Filte r* measurement in TS 28.552, where "filter" is S-NSSAI | | |
| | >>S-NSSAI Item | STRUCTURE | A.1.3 | | |
| >List of PLMN IDs | | | *DRB.PdcpF1DelayDI_Filte r* measurement in TS 28.552, where "filter" is PLMN ID | | |
| | >>PLMN ID Item | STRUCTURE | A.1.4 | | |
| DRB_RlcSduDelayDI | | STRUCTURE | *DRB.RlcSduDelayDI* measurement in TS 28.552 | CMService.NRNRM. NRCellDU | Discrete Event Registration |
| >List of QoS Indices | | LIST | *DRB.RlcSduDelayDI_Filte r* measurement in TS 28.552, where "filter" is QoS level | | |
| | >>QoS Index Item | STRUCTURE | A.1.2 | | |
| >List of SNSSAIs | | LIST | *DRB.RlcSduDelayDI_Filte r* measurement in TS 28.552, where "filter" is S-NSSAI | | |
| | >>S-NSSAI Item | STRUCTURE | A.1.3 | | |
| >List of PLMN IDs | | | *DRB.RlcSduDelayDI_Filte r* measurement in TS 28.552, where "filter" is PLMN ID | | |
| | >>PLMN ID Item | STRUCTURE | A.1.4 | | |
| DRB_PdcpSduDelayDI Dist | | STRUCTURE | *DRB.PdcpSduDelayDIDist* measurement in TS 28.552 | CMService.NRNRM. GNBCUUPFunction | Discrete Event Registration |
| >List of Bins | | LIST | *DRB.PdcpSduDelayDIDist .Bin* measurement in TS 28.552 | | |
| | >>Bin Item | STRUCTURE | A.1.1 | | |
| >List of QoS Indices | | LIST | *DRB.PdcpSduDelayDIDist .Bin_Filter* measurement in TS 28.552, where "filter" is QoS level | | |
| | >>QoS Index Item | STRUCTURE | A.1.2 | | |
| >List of SNSSAIs | | LIST | *DRB.PdcpSduDelayDIDist .Bin_Filter* measurement in TS 28.552, where "filter" is SNSSAI | | |
| | >>S-NSSAI Item | STRUCTURE | A.1.3 | | |
| >List of PLMN IDs | | LIST | *DRB.PdcpSduDelayDIDist .Bin_Filter* measurement in TS 28.552, where "filter" is PLMN ID | | |
| | >>PLMN ID Item | STRUCTURE | A.1.4 | | |
| DRB_GtpF1DelayDIDist | | STRUCTURE | *ORB.GtpF1DelayDIDist* measurement in TS 28.552 | CMService.NRNRM. GNBCUUPFunction | Discrete Event Registration |
| >List of Bins | | LIST | *DRB.GtpF1DelayDIDist.Bi n* measurement in TS 28.552 | | |
| | >>Bin Item | STRUCTURE | A.1.1 | | |
| >List of QoS Indices | | LIST | *DRB.GtpF1DelayDIDist.Bi n*_*Filter* measurement in TS 28.552, where "filter" is QoS level | | |
| | >>QoS Index Item | STRUCTURE | A.1.2 | | |
| >List of SNSSAIs | | LIST | *DRB.GtpF1DelayDIDist.Bi n*_*Filter* measurement in TS 28.552, where "filter" is SNSSAI | | |
| | >>S-NSSAI Item | STRUCTURE | A.1.3 | | |
| >List of PLMN IDs | | LIST | *DRB.GtpF1DelayDIDist.Bi n_Filter* measurement in TS 28.552, where "filter" is PLMN ID | | |
| | >>PLMN ID Item | STRUCTURE | A.1.4 | | |
| DRB_RlcSduDelayDist | | STRUCTURE | *DRB.RlcSduDelayDIDist* measurement in TS 28.552 | CMService.NRNRM. NRCellDU | Discrete Event Registration |
| >List of Bins | | LIST | *DRB.RlcSduDelayDIDist.B in* measurement in TS 28.552 | | |
| | >>Bin Item | STRUCTURE | A.1.1 | | |
| >List of QoS Indices | | LIST | *DRB.RIcSduDelayDIDist.B in_Filter* measurement in TS 28.552, where "filter" is QoS level | | |
| | >>QoS Index Item | STRUCTURE | A.1.2 | | |
| >List of SNSSAIs | | LIST | *DRB.RIcSduDelayDIDist.B in_Filter* measurement in TS 28.552, where "filter" is SNSSAI | | |
| | >>S-NSSAI Item | STRUCTURE | A.1.3 | | |
| >List of PLMN IDs | | LIST | *DRB.RIcSduDelayDIDist.B in_Filter* measurement in TS 28.552, where "filter" is PLMN Id | | |
| | >>PLMN ID Item | STRUCTURE | A.1.4 | | |

**Trace Management data capabilities.** These capabilities are associated with trace management of one or more managed entities.

The Trace data capabilities correspond to:
a) The trace records pertaining to call trace for 5G NR O-RAN NFs, available in Section 4 of 3GPP TS 32.423.
b) The trace records pertaining to call trace for 4G E-UTRA O-RAN NFs, available in Section 4 of 3GPP TS 32.423.
c) The trace records pertaining to NR MDT trace for 5G O-RAN NFs, available in Section 4 of 3GPP TS 32.423.
d) The trace records pertaining to E-UTRA MDT trace for 4G O-RAN NFs, available in Section 4 of 3GPP TS 32.423.
e) The trace records pertaining to NR RLF trace for 5G O-RAN NFs, available in Section 4 of 3GPP TS 32.423.
f) The trace records pertaining to E-UTRA RLF trace for 4G O-RAN NFs, available in Section 4 of 3GPP TS 32.423.
g) The trace records pertaining to NR RCEF trace for 5G O-RAN NFs, available in Section 4 of 3GPP TS 32.423.
h) The trace records pertaining to E-UTRA RCEF trace for 4G O-RAN NFs, available in Section 4 of 3GPP TS 32.423.

Each Trace data capability corresponds to a Trace data type.

Each Trace data type comprises a set of IEs, each of which has the following information:
a) **An IE name** - the name of the IE being traced.
b) **Value type of the IE** - The IE could be of one of the following types: i) ELEMENT - If the IE corresponds to only a single trace content (such as message name), ii) STRUCTURE - If the IE corresponds to a structure of trace IEs, each of which belongs to a value type that is either ELEMENT or STRUCTURE or LIST, iii) CHOICE - If the IE corresponds to one among the sequence of trace IEs, each of which belongs to a value type that is either ELEMENT or STRUCTURE or LIST, iv) LIST - If the IE corresponds to a LIST of STRUCTURES, where each STRUCTURE is as defined above. The sequence of trace content IEs is the same across all individual ITEMIZED STRUCTURES within the list.
c) **Depth of the trace IE** - i) Minimum - As per definition of 3GPP TS 32.422 and 32.423, and ii) Medium - As per definition of 3GPP TS 32.422 and 32.423.
d) **Trigger for the IE** - Event-based and Periodic.
e) **A Data type,** definition and unit for the IE - The definition, data type and value range of the IE shall be traced to the corresponding 3GPP/O-RAN definitions in 3GPP TS 32.423.

For each data type, support for MAXIMUM depth of tracing is indicated. Each Trace data type shall support one or more of the following data generation/reporting triggers: a) Event-driven: As indicated in the IEs or based on 3GPP specs; and b) Periodic: For reporting the list of trace data, supporting periodic reporting, at a designated interval.

As examples, we look at the following trace capabilities: Measurement data capability "E-UTRAN Call trace" where the data type (used over R1) of this capability is TraceService.EUTRANCallTrace.X2AP as depicted in Table 7.

**Table 7**

| **IE Name** | **IE Value Type** | **IE Definition** | **IE Supported depth levels** | **IE Trigger** |
|---|---|---|---|---|
| E-RAB Id | ELEMENT | *E-RAB Id* IE in TS 32.423 Sec 4.13 of E-UTRAN Trace Record Content | Minimum, Medium | Event-based |
| E-RAB Level QoS | STRUCTURE | *E-RAB Level QoS* IE in **TS 32.423** Sec 4.13 of E-UTRAN Trace Record Content | Minimum, Medium | Event-based |
| >HANDOVER REQUEST | ELEMENT | *HANDOVER REQUEST* IE in **TS 32.423** Sec 4.13 of E-UTRAN Trace Record Content | | |
| >SGNB ADDITION REQUEST | ELEMENT | *SGNB ADDITION REQUEST* IE in **TS 32.423** Sec 4.13 of E-UTRAN Trace Record Content | | |
| >SGNB ADDITION REQUEST ACKNOWLEDGE | ELEMENT | *SGNB ADDITION REQUEST ACKNOWLEDGE* IE in **TS 32.423** Sec 4.13 of E-UTRAN Trace Record Content | | |
| >SGNB MODIFICATION REQUEST | ELEMENT | *SGNB MODIFICATION REQUEST* IE in Sec **TS 32.423** 4.13 of E-UTRAN Trace Record Content | | |
| >SGNB MODIFICATION REQUEST ACKNOWLEDGE | ELEMENT | *SGNB MODIFICATION REQUEST ACKNOWLEDGE* IE in **TS 32.423** Sec 4.13 of E-UTRAN Trace Record Content | | |
| >SGNB MODIFICATION REQUIRED | ELEMENT | *SGNB MODIFICATION REQUIRED* IE in **TS 32.423** Sec 4.13 of E-UTRAN Trace Record Content | | |
| Cause | STRUCTURE | *Cause* IE in **TS 32.423** Sec 4.13 of E-UTRAN Trace Record Content | Minimum, Medium | Event-based |
| >HANDOVER REQUEST | ELEMENT | *HANDOVER REQUEST* IE in **TS 32.423** Sec 4.13 of E-UTRAN Trace Record Content | | |
| >HANDOVER PREPARATION FAILURE | ELEMENT | *HANDOVER PREPARATION FAILURE* IE in **TS 32.423** Sec 4.13 of E-UTRAN Trace Record Content | | |
| >HANDOVER CANCEL | ELEMENT | *HANDOVER CANCEL* IE **in TS 32.423** Sec 4.13 of E-UTRAN Trace Record Content | | |
| >SGNB ADDITION REQUEST REJECT | ELEMENT | *SGNB ADDITION REQUEST REJECT* IE in **TS 32.423** Sec 4.13 of E-UTRAN Trace Record Content | | |
| >SGNB RECONFIGURATION COMPLETE | ELEMENT | *SGNB RECONFIGURATION COMPLETE* IE in **TS 32.423** Sec 4.13 of E-UTRAN Trace Record Content | | |
| >SGNB MODIFICATION REQUEST | ELEMENT | *SGNB MODIFICATION REQUEST* IE **in TS 32.423** Sec 4.13 of E-UTRAN Trace Record Content | | |
| >SGNB MODIFICATION REQUEST REJECT | ELEMENT | *SGNB ADDITION MODIFICATION REJECT* IE in **TS 32.423** Sec 4.13 of E-UTRAN Trace Record Content | | |
| >SGNB MODIFICATION REQUIRED | ELEMENT | *SGNB ADDITION REQUIRED* IE in **TS 32.423** Sec 4.13 of E-UTRAN Trace Record Content | | |
| >SGNB MODIFICATION REFUSE | ELEMENT | *SGNB MODIFICATION REFUSE* IE in **TS 32.423** Sec 4.13 of E-UTRAN Trace Record Content | | |
| >SGNB RELEASE REQUEST | ELEMENT | *SGNB RELEASE REQUEST* IE in **TS 32.423** Sec 4.13 of E-UTRAN Trace Record Content | | |
| >SGNB RELEASE REQUEST REJECT | ELEMENT | *SGNB RELEASE REQUEST REJECT* IE in Sec 4.13 of E-UTRAN Trace Record Content | | |
| >SGNB RELEASE REQUIRED | ELEMENT | *SGNB RELEASE REQUIRED* IE in **TS 32.423** Sec 4.13 of E-UTRAN Trace Record Content | | |
| >SGNB CHANGE REQUIRED | ELEMENT | *SGNB CHANGE REQUIRED* IE in **TS 32.423** Sec 4.13 of E-UTRAN Trace Record Content | | |
| >SGNB CHANGE REFUSE | ELEMENT | *SGNB CHANGE REFUSE* IE in **TS 32.423** Sec 4.13 of E-UTRAN Trace Record Content | | |
| TARGET CELL ID | STRUCTURE | *Target Cell ID* IE in **TS 32.423** Sec 4.13 of E-UTRAN Trace Record Content | Minimum, Medium | Event-based |
| >HANDOVER REQUEST | ELEMENT | *HANDOVER REQUEST* IE in **TS 32.423** Sec 4.13 of E-UTRAN Trace Record Content | | |
| GUMMEI | STRUCTURE | *GUMMEI* IE in **TS 32.423** Sec 4.13 of E-UTRAN Trace Record Content | Minimum, Medium | Event-based |
| >HANDOVER REQUEST | ELEMENT | *HANDOVER REQUEST* IE in **TS 32.423** Sec 4.13 of E-UTRAN Trace Record Content | | |
| UE HISTORY INFORMATION | STRUCTURE | *UE History Information* IE in **TS 32.423** Sec 4.13 of E-UTRAN Trace Record Content | Minimum, Medium | Event-based |
| >HANDOVER REQUEST | ELEMENT | *HANDOVER REQUEST* IE in **TS 32.423** Sec 4.13 of E-UTRAN Trace Record Content | | |

Table 8 shows measurement data capability "NR MDT Immediate Trace". The data type (used over R1) of this capability is TraceService.NRMDTImmediateTrace.M1.

**Table 8**

| **IE Name** | | | | | | **IE Value Type** | **IE Definition** | **IE Supported depth levels** | **IE Trigger** |
|---|---|---|---|---|---|---|---|---|---|
| RRC measurement information | | | | | | STRUCTURE | | - | Event-based, Periodic |
| >List of RRC measurements | | | | | | LIST | *RSRPs* IE, *RSRQs* IE, *SINRs* IE in TS 32.423 Sec 4.34.1 | | |
| | >>RRC measurement | | | | | STRUCTURE | | | |
| | | >>>RSRP | | | | ELEMENT | | | |
| | | >>>RSRQ | | | | ELEMENT | | | |
| | | >>>SINR | | | | ELEMENT | | | |
| >Cell support information | | | | | | CHOICE | | | |
| | >>All Cells | | | | | ELEMENT | | | |
| | >>Subset of Cells | | | | | STRUCTURE | | | |
| | | >>>Cell Identification | | | | STRUCTURE | | | |
| | | | >>>>Cell Identification Type | | | ELEMENT | | | |
| | | | >>>>List of cells | | | LIST | Corresponding to *PCIs* in TS 32.423 Sec 4.34.1 | | |
| | | | | >>>>>Cell Item | | STRUCTURE | | | |
| | | | | | >>>>>>Ce ll ID | ELEMENT | **ENUMERATED (PCI, CGI, ...)** | | |
| | | >>>PLMN Identification | | | | STRUCTURE | | | |
| | | | >>>>List of PLMN IDs | | | LIST | | | |
| | | | | >>>>>PLMN Item | | STRUCTURE | | | |
| | | | | | >>>>>>PL MN ID | ELEMENT | | | |
| >Triggering Event | | | | | | ELEMENT | *Triggering event* IE in TS 32.423 Sec 4.34.1 | - | |
| UE location | | | | | | ELEMENT | *UE location* IE in TS 32.423 Sec 4.34.1 | | Event-based, Periodic |

The relationship between a data consumer rApp and a data producer of the RAN OAM-related data as follows:
A data consumer can create multiple data request subscriptions with a data producer of OAM-related data. Each subscription request can include data types pertaining to one or more data type capabilities. Each data type capability can have a list of associated filters (indicating IEs, data granularity, etc.). Each subscription request has a reporting method (streaming, data availability notifications, file reporting). Each subscription request indicates a reporting target (endpoint). Each subscription request indicates a reporting periodicity. Each subscription request indicates a start time and end time.

For a data consumer rApp to create a data request subscription to a data producer over R1, the data consumer rApp would need to discover the OAM data type capabilities over R1.

**Required IEs or IE structures.** This section discusses encoding models for the discovery of the RAN OAM-related data based on the semantics previously discussed to be used for the IEs and IE structures in the relevant R1AP messages, such as Data Discovery. It is not required for the IEs/IE structures to be incorporated as is, in the O-RAN R1AP specifications, but it is required to duly consider the following IEs/IE structures while designing the respective R1AP messages. Reference is made to Table 9.

**Table 9**

| **[0094] IE/Group Name** | | **Presence** | **Range** | **IE type and reference** | **Semantics description** |
|---|---|---|---|---|---|
| **List of O-RAN NFs** | | | *1* | | List of O-RAN NFs (incl. O-CU-CP, O-CU-UP, O-DU, O-RU, O-eNB) for which OAM data are available for the R1 data consumers |
| **>O-RAN NF Item IEs** | | | *1..*<*maxofNFs*> | | |
| | >>O-RAN NF ID | M | | 4.1.1.1 | |
| **List of O-RAN network slice subnets** | | | *0..1* | | |
| **>O-RAN network slice subnet Item IEs** | | | *1..<maxofNetworkSlice Subnets>* | | |
| | >>Corresponding O-RAN network slice ID | M | | INTEGER | Refer to TS 28.541 Sec 6 |
| RAN OAM CM service data capabilities | | M | | 4.1.1.2 | |
| RAN OAM PM service data capabilities | | M | | 4.1.1.3 | |
| RAN OAM FM service data capabilities | | M | | 4.1.1.4 | |
| RAN OAM Trace service data capabilities | | M | | 4.1.1.5 | |

O-RAN NF ID is referenced in Table 10.

**Table 10**

| **IE/Group Name** | | | | **Presence** | **Range** | **IE type and reference** | **Semantics description** |
|---|---|---|---|---|---|---|---|
| **CHOICE** *O-RAN NF Type* | | | | M | | | |
| *>O-CU-CP* | | | | | | | |
| | >>CHOICE *NodeB Type* | | | M | | | |
| | | *>>>gNB* | | | | | |
| | | | >>>>gNB O-CU-CP ID | M | | 3GPP TS 38.413 Sec 9.3.1.6 | |
| | | >>>*en-gNB* | | | | | |
| | | | >>>>en-gNB O-CU-CP ID | M | | 3GPP TS 38.423 Sec 9.2.112 | |
| >*O-CU-UP* | | | | | | | |
| | >>CHOICE *NodeB Type* | | | M | | | |
| | | *>>>gNB* | | | | | |
| | | | >>>>gNB O-CU-UP ID | M | | 3GPP TS 37.483 Sec 9.3.1.15 | |
| | | *>>>en-gNB* | | | | | |
| | | | >>>>en-gNB O-CU-UP ID | M | | 3GPP TS 37.483 Sec 9.3.1.15 | |
| *>O-DU* | | | | | | | |
| | >>CHOICE *NodeB Type* | | | M | | | |
| | | *>>>gNB* | | | | | |
| | | | >>>>gNB O-DU ID | M | | 3GPP TS 38.473 Sec 9.3.1.9 | |
| | | >>>*en-gNB* | | | | | |
| | | | >>>>en-gNB O-DU ID | M | | 3GPP TS 38.473 Sec 9.3.1.9 | |
| | | >>>*ng-eNB* | | | | | |
| | | | >>>>ng-eNB O-DU ID | M | | 3GPP TS 37.473 Sec 9.3.1.9 | |
| *>O-eNB* | | | | | | | |
| | >>CHOICE *NodeB Type* | | | | | | |
| | | *>>>eNB* | | | | | |
| | | | >>>>O-eNB ID | M | | 3GPP TS 36.423 Sec 9.2.22 | |
| | | >>>*ng-eNB* | | | | | |
| | | | >>>>ng-eNB O-CU ID | M | | 3GPP TS 38.423 Sec 9.2.2.2 | |
| *>Near-RT RIC* | | | | | | | |
| | >>RIC ID | | | M | | O-RAN WG3 E2AP Sec 9.2.4 | |
| >O-RU | | | | | | | |
| | >>O-RU ID | | | M | | O-RAN WG4 M-plane | |

Data Capabilities of RAN OAM CM service are referenced in Table 11.

**Table 11**

| **IE/Group Name** | | | | **Presence** | **Range** | **IE type and reference** | **Semantics description** |
|---|---|---|---|---|---|---|---|
| **List of data Capabilities of CM Service** | | | | | ***1*** | | |
| **>Data Capability Item IEs** | | | | | *1..<maxDataCapabiliti es>* | | |
| | >>CM data type | | | M | | From R1-TD (proposed, as in Sec 3) | |
| | >>CM data capability name | | | O | | | |
| | **>>List of CM data type IEs** | | | | *1* | | |
| | | **>>>CM data type Item IEs** | | | *1..<maxCMDataTypes* > | | |
| | | | >>>>IE name | M | | | |
| | | | >>>>IE value type definition | M | | 4.1.2 | |
| | | | >>>>Notification type supported | O | | ENUMERATED (periodic, eventDriven, both, ...) | |
| | **>>List of name-containment data types** | | | | ***0..1*** | | |
| | | **>>>Name-containment data type Item IEs** | | | *1..<maxNameContainm entassociations>* | | |
| | | | >>>>CM data type | M | | | |
| | | | >>>>Multiplicity of associations | M | | ENUMERATED (true, ... ) | |
| | **>>List of non-name-containment associated data types** | | | | ***0..1*** | | |
| | | **>>>Non-name-containment associated data type Item IEs** | | | *1..<maxNonNameConta inmentassociations>* | | |
| | | | >>>>CM data type | M | | | |
| | | | >>>>Multiplicity of associations | M | | ENUMERATED (true, ...) | |
| **List of supported event triggers for notification** | | | | | ***0..1*** | | |
| **>Supported event trigger Item IEs** | | | | | *1..<maxSupportedEvent TriggerTypes>* | | |
| | >>Event trigger type | | | M | | ENUMERATED (MOI creation, MOI modification, MOI deletion, NSSI creation, NSSI modification, NSSI deletion, O-RU modification, ...) | |
| **List of supported periodicities for notification or streaming** | | | | | ***0..1*** | | |
| **>Supported periodicities for notification or streaming Item IEs** | | | | | *1..<maxSupportedPerio dicities>* | | |
| | >>Supported periodicity for notification | | | M | | ENUMERATED (1s, 2s, 5s, 10s, 15s, 30s, 1min, 2min, 5min, 10min, 15min, 30min, 1hr, ...) | |

Data Capabilities of RAN OAM PM service are referenced in Table 12.

**Table 12**

| | | | | | | | |
|---|---|---|---|---|---|---|---|
| **List of data Capabilities of PM Service** | | | | | ***1*** | | |
| **>Data Capability Item IEs** | | | | | *1..<maxDataCapabil ities>* | | |
| | >>PM data type | | | M | | From R1-TD (proposed, as in Sec 3) | |
| | >>PM data capability name | | | O | | | |
| | **>>List of PM data type IEs** | | | | ***1*** | | |
| | | **>>>PM data type Item IEs** | | | *1..<maxPMDataTyp* es> | | |
| | | | >>>>IE name | M | | | |
| | | | >>>>IE value type definition | M | | 4.1.2 | |
| | | | >>>>Notification type supported | M | | ENUMERATED (periodic, eventDriven, both, ...) | |
| | | | >>>>Supported Measurement Class data type | M | | | The corresponding CM data type for this |
| | | | >>>>Collection method | M | | ENUMERATED (cumulativeCount er, guageCounter, discreteEventRegi stration, Statusinspection, ...) | |
| **List of supported periodicities for notification or streaming** | | | | | ***0..1*** | | |
| **>Supported periodicities for notification or streaming Item IEs** | | | | | *1..<maxSupportedP eriodicities>* | | |
| | >>Supported periodicity for notification or streaming | | | M | | ENUMERATED (1s, 2s, 5s, 10s, 15s, 30s, 1min, 2min, 5min, 10min, 15min, 30min, 1hr, ...) | |

Data capabilities of RAN OAM Trace service are referenced in Table 13.

**Table 13**

| **IE/Group Name** | | | | **Presence** | **Range** | **IE type and reference** | **Semantics description** |
|---|---|---|---|---|---|---|---|
| **List of data Capabilities of Trace Service** | | | | | ***1*** | | |
| **>Data Capability Item IEs** | | | | | *1..<maxDataCapabil ities>* | | |
| | >>Trace data type | | | M | | From R1-TD (proposed,as in Sec 3) | |
| | >>Trace data capability name | | | O | | | |
| | >>Maximum depth of tracing supported | | | O | | ENUMERATED (true, ...) | |
| | **>>List of Trace data type IEs** | | | | ***1*** | | |
| | | **>>>Trace data type Item IEs** | | | *1..<maxTraceDataT ypes>* | | |
| | | | >>>>IE name | M | | | |
| | | | >>>>IE value type definition | M | | 4.1.2 | |
| | | | >>>>Supported Trace depth | M | | ENUMERATED (minimum, medium, both, ...) | |
| | | | >>>>Notification type | M | | ENUMERATED (periodic, eventDriven, both, ...) | |
| **List of supported periodicities for notification or streaming** | | | | | ***0*..*1*** | | |
| **>Supported periodicities for notification or streaming Item IEs** | | | | | *1..<maxSupportedP eriodicities>* | | |
| | >>Supported periodicity for notification or streaming | | | M | | ENUMERATED (1s, 2s, 5s, 10s, 15s, 30s, 1min, 2min, 5min, 10min, 15min, 30min, 1hr, ...) | |

IE value type definition is referenced in Table 14.

**Table 14**

| **IE Name** | | | **Presence** | **Range** | **IE type and reference** | **Semantics description** |
|---|---|---|---|---|---|---|
| **CHOICE** *IE Value Type Definition* | | | | | | |
| ***>LIST*** | | | | | | A list of IE structures, where every IE in each itemized structure is repeated across the itemized structures in the list |
| | **>>List of IEs** | | | ***1...<maxofItemsi nList>*** | | |
| | | >>>IE structure | M | | 4.1.2 | *STRUCTURE* IE in IE value type definition in Sec 4.1.2 |
| ***>STRUCTURE*** | | | | | | When the IE (or attribute) in turn refers to a structure of other IEs (or attributes) |
| | **>>Sequence of IEs in IE structure** | | | ***1...<maxofIEsinS tructure>*** | | |
| | | >>>IE name | M | | R1-TD (proposed, as in Sec 3) | |
| | | >>>IE value Type definition | M | | 4.1.2 | A sequence of IEs, where each IE could in turn be of type LIST or STRUCTURE or CHOICE or ELEMENT |
| ***>CHOICE*** | | | | | | When the IE (or attribute) refers to one of the IEs (or attributes) in a structure |
| | **>>Sequence of IEs in IE structure** | | | ***1*...*<maxofIEsinS tructure>*** | | |
| | | >>>IE name | M | | R1-TD (proposed, as in Sec 3) | |
| | | >>>IE value Type definition | M | | 4.1.2 | |
| ***>ELEMENT*** | | | | | | |
| | >>IE data type | | M | | ENUMERATE D (Integer, Real, Boolean, Octet String,..) | As per data types of IEs defined in 3GPP specs (TS 28.541, TS 28.658, TS 28.552, ...) |
| | >>IE data unit | | O | | | |
| | >>Key flag notion | | O | | ENUMERATE D (true, ...) | |

This invention discloses the RAN semantics of OAM-related data produced by the OAM-related functions in the non-RT RIC in the context of getting consumed over the R1 interface by any consumer such as the rApp, and the associated encoding models for encoding the IEs/IE structures that capture the invented semantics.

Various parameter structures are shown in the Annex including BinDistribution (Table 15), Quality of Service (QoS) Subcounter (Table 16), Single - Network Slice Selection Assistance Information (SNSSAI) Subcounter (Table 17), and Public Land Mobile Network (PLMN) Subcounter (Table 18).

While the present disclosure has been described with reference to one or more exemplary embodiments, it will be understood by those skilled in the art that various changes may be made and equivalents may be substituted for elements thereof without departing from the scope of the present disclosure. In addition, many modifications may be made to adapt a particular situation or material to the teachings of the disclosure without departing from the scope thereof. Therefore, it is intended that the present disclosure not be limited to the particular embodiment(s) disclosed as the best mode contemplated, but that the disclosure will include all embodiments falling within the scope of the appended claims.

### Annex - Parameter Structures

### BinDistribution

**Table 15**

| **IE Name** | | **IE Value Type** | **IE Definition** | **Semantics** |
|---|---|---|---|---|
| Bin | | CHOICE | *BinX* or *BinY* or *BinZ* sub-counter in TS 28.552 | |
| >BinValue | | ELEMENT | INTEGER | Only for single values represented by the bins, as in TS 28.552 |
| >BinRange | | STRUCTURE | | For range of values represented by each bin, as in TS 28.552 |
| | >>BinStart | ELEMENT | INTEGER | The beginning of the bin range, as in TS 28.552 |
| | >>BinEnd | ELEMENT | INTEGER | The end of the bin range, as in TS 28.552 |

### QoS Subcounter

**Table 16**

| **Measurement Name** | **Measurement Value Type** | **Measurement Definition** | **Semantics** |
|---|---|---|---|
| CHOICE QoS *ID Type* | CHOICE | *QoS* sub-counter in TS 28.552 | |
| >QCI | ELEMENT | INTEGER | *QC*/ IE in TS 23.501 |
| >FiveQI | ELEMENT | INTEGER | *5Q*/ IE in TS 23.501 |

### SNSSAI Subcounter

**Table 17**

| **Measurement Name** | **Measurement Value Type** | **Measurement Definition** | **Semantics** |
|---|---|---|---|
| S-NSSAI | STRUCTURE | *SNSSAI* sub-counter in TS 28.552 | |
| >SST | ELEMENT | INTEGER | *SST* IE in TS 23.501 |
| >SD | ELEMENT | INTEGER | *SD* IE in TS 23.501 |

### PLMN Subcounter

**Table 18**

| **Measurement Name** | **Measurement Value Type** | **Measurement Definition** | **Semantics** |
|---|---|---|---|
| PLMN ID | ELEMENT | *PLMN ID* sub-counter in TS 28.552 | |

## Claims

1. A method of information encoding for Radio Access Network Operations, Administration, and Maintenance (RAN OAM) related data via a computer comprising the steps of:
providing semantics of RAN OAM data (RAN semantics) comprising RAN OAM-related data to be used while exchanging information over standardized interfaces for inter-operability;
providing a generic information encoding model for encoding the RAN OAM-related data, the generic information encoding model using common message structures to encode OAM-related RAN parameters nested in RAN structures for exchanging Application Programming Interface (API) messages between R1 data producers and R1 data consumers,
wherein the generic information encoding model using Information Elements (IE) and/or IE structures leverage the RAN semantics;
enabling an R1 data consumer via a data customer computer to discover data capabilities of an R1 data producer that produces the RAN OAM-related data over an Open-RAN (O-RAN) standardized R1 interface between rApps and Non-RT RIC/ service management and orchestration (SMO) platform functions.

2. The method of claim 1, further comprising using a transport protocol that is Representational State Transfer/JavaScript Object Notation (REST/JSON).

3. The method of claim 1, wherein the encoding model and IE structure is based on JavaScript Object Notation (JSON).

4. The method of claim 1, wherein the encoding model and IE structure is based on an open source Remote Procedure Call/Group-Based Policy (gRPC/GPB).

5. The method of claim 1, wherein the RAN OAM-related data includes Configuration Management (CM) data, and each CM data type supports one or more of the following data generation/reporting triggers: a) event-driven, and b) periodic.

6. The method of claim 5, wherein the CM data type supports event-driven data generation/reporting triggers, when an instance of the CM data type is created in an O-RAN NF, or when an instance of the CM data type is modified in an O-RAN NF, or when an instance of the CM data type is deleted in an O-RAN NF.

7. The method of claim 5, wherein when the CM data type supports periodic data generation/reporting triggers, a list of events related to the CM data type at a designated interval is reported.

8. The method of claim 5, wherein rApps are enabled to retrieve configuration schemes, read configuration data, and write configuration changes.

9. The method of claim 1, wherein the RAN OAM-related data includes Performance Management (PM) data, and each PM data type supports one or more of the following data generation/reporting triggers: a) event-driven, and b) periodic.

10. The method of claim 9, wherein when the PM data type supports periodic data generation/reporting triggers, a list of measurement IEs and supporting periodic triggers related to the PM data type at a designated interval is reported.

11. The method of claim 9, wherein rApps are enabled to query performance information.

12. The method of claim 1, wherein the RAN OAM-related data includes Trace Management (TM) data, and each TM data type supports one or more of the following data generation/reporting triggers: a) event-driven, and b) periodic.

13. The method of claim 12, wherein rApps are enabled to query alarm information, and change an alarm acknowledgement state.

14. The method of claim 1, wherein the RAN OAM-related data includes Fault Management (FM) data.

15. The method of claim 14, wherein RAN OAM-related functions register services produced with Service Management and Exposure (SME) Function for discovery by the rApps.
